# EUROPÄISCHE PATENTSCHRIFT

(11) **EP 1 165 198 B1**
(45) Veröffentlichungstag und Bekanntmachung des Hinweises auf die Patenterteilung: **04.06.2008**
(21) Anmeldenummer: 00916803.0
(22) Anmeldetag: 09.03.2000
(51) Int. Cl.: B01D 9/00

(54) **VERFAHREN ZUR STEUERUNG DER KRISTALLGRÖSSE BEI DER KONTINUIERLICHEN MASSENKRISTALLISATION**
METHOD FOR CONTROLLING CRYSTAL SIZE DURING CONTINUOUS MASS CRYSTALLISATION
PROCEDE DE REGULATION DE LA TAILLE DE CRISTAUX LORS DE LA CRISTALLISATION DE MASSE EN CONTINU

(30) Priorität: 20.03.1999 DE 19912699
(43) Veröffentlichungstag der Anmeldung: 02.01.2002
(73) Patentinhaber: Domo Caproleuna GmbH, 06237 Leuna (DE)
(72) Erfinder: SEIDEL, Birgit, D-06254 Luppenau (DE); ULLRICH, Peter, D-06184 Zwintschöna (DE); ZEIBIG, Michael, D-06237 Spergau (DE); SCHMITT, Dieter, D-06237 Leuna (DE)
(74) Vertreter: Wablat, Wolfgang
(86) Internationale Anmeldenummer: PCT/DE2000/000747
(87) Internationale Veröffentlichungsnummer: WO 2000/056416

(56) Entgegenhaltungen:
- EP-A- 0 255 786
- WO-A-93/19826
- US-A- 3 642 534

## Beschreibung

Bei der Herstellung von Massenprodukten durch Kristallisation werden hohe Anforderungen an die Korngröße gestellt.

Um die Herstellungskosten solcher Produkte zu minimieren, ist es erforderlich, schon im Kristallisationsprozeß möglichst nahe an diese Korngrößenverteilungen heranzukommen und sie stabil zu produzieren. Die Erfindung betrifft ein Verfahren zur Steuerung der Kristallgröße bei der kontinuierlichen Massenkristallisation.

Insbesondere Ammoniumsulfat als Düngemittel oder technisches Produkt wird vorzugsweise über Kristallisationsprozesse erzeugt. Bei der Düngemittelproduktion wird ein grobkristallines Produkt mit definiertem Kornspektrum verlangt, um die geforderten Streubreiten und Streugenauigkeiten zu garantieren. Die technischen Produkte sollen eher feinkristallin sein.

Die Funktionsweise und der Aufbau eines Draft Tube Buffle-Kristallisationsapparates (DTB-Kristaller) sind bekannt (USP 3 873 275).

Hiermit sind die geforderten Kornverteilungen herstellbar, aber nicht stabil zu produzieren. Auf Grund ihrer konstruktiven Gestaltung unter dem Gesichtspunkt der Minimierung der Feinkornbildung durch gezielte Vernichtung von Kristallisationskeimen neigen besonders die DTB-Kristallisatoren zu starken zyklischen Schwankungen in der Korngrößenverteilung.

Bekannt ist auch eine Apparatur mit einer dynamischen Kontrollmethode. Auf Grundlage der Analyse der Korngrößenverteilung des Kristallisates im Kristallisationsapparat werden verschiedene Prozeßvariable, wie die Rückführungsrate an Feinkorn, der Volumenstrom der Speiselösung, der pH-Wert, der Durchmischungsgrad oder die Zuführung von Impfkristallen, gesteuert und damit eine gleichmäßige Korngrößenverteilung erhalten (USP 4 263 010).

Diese Methode ist aber technologisch sehr aufwendig und kaum stabil zu gestalten.

Bekannt ist auch eine Methode zur Erzeugung von großen Kristallen mittels eines DTB-Kristallers. Auf Grundlage der Erfassung der Suspensionsdichte im Kristallisationsapparat, der Rührermotorstromaufnahme der Höhe des Kristallbettes unter dem Buffle und der Kristallgrößenverteilung wird der Abzug von Kristall aus dem DTB-Kristaller (Produktionsrate) alternierend gestaltet (JP 150 127).

Der Anteil der Kristalle größer 1,4 mm wird zwar erhöht, aber der Anteil der Kristalle größer 2,0 mm schwankt noch in den Grenzen von 35 % bis 90 %. Äußerst nachteilig für nachgeschaltete technologische Einheiten sind die alternierend schwankende Produktionsrate und damit auch die ungenügende Auslastung der installierten Kapazität der Anlage.

Ferner ist ein Verfahren bekannt, durch das in einem DTB-Kristaller der Anteil großer Kristalle erhöht wird. Bei diesem Verfahren wird dem Kristaller eine Kristallsuspension mit 6 Vol.-% bis 25 Vol.-% Feststoff zugeführt, wobei der Feststoff dieser Suspension 4 Gew.-% bis 25 Gew.-% des aus dem Kristaller abgezogenen Feststoffes beträgt. 35 Gew.-% bis 85 Gew.-% der Impfkristalle sind bei diesem Verfahren größer als 1,2 mm und nicht mehr als 15 Gew.-% der Kristalle sind größer als 1,7 mm (WO 93/19826).

Die Temperatur der Impfsuspension liegt dabei tiefer als die Temperatur im Kristaller.

Nachteilig bei diesem Verfahren ist, daß nur eine Vergleichsmäßigung der Produktion und eine Erhöhung des Anteils größerer Kristalle erreicht wird. Sowohl das gezielte Steuern der Kristallgröße als auch die Produktion von Produkt mit feinerer Kristallgröße werden nicht beschrieben und beansprucht.

Die Aufgabe der Erfindung bestand darin, diese Nachteile zu beseitigen, d.h. ein Verfahren zur reproduzierbaren Steuerung der Kristallgröße bei der kontinuierlichen Massenkristallisation zu finden.

Erfindungsgemäß gelingt dies durch ein Verfahren mit Zugabe von Impfprodukten, gemäß dem Gegenstand des Anspruchs 1.

In den Kristallisationsapparat wird eine Kristallsuspension zugeführt, deren Parameter völlig unabhängig vom aktuellen Kristallisationsprozeß einstellbar sind. Diese Suspension ist charakterisiert durch den Feststoffgehalt, dessen Korngrößenverteilung und der pro Zeiteinheit in den Kristallisationsapparat eingespeisten Menge des Produktes.

Über die Steuerung der Parameter dieses Impfproduktes werden die Korngrößenverteilung des Endproduktes beeinflußt und die Schwankungen in der Korngrößenverteilung des Endproduktes (Feststoffabzug aus dem Kristallisationsapparat) deutlich vermindert.

Die genauen Parameter des Impfproduktes können bei einem gegebenen Kristallisationsapparat, bezogen auf dessen gewünschten stationären Zustand, empirisch ermittelt werden.

Das Verfahren kann sowohl bei diskontinuierlicher, als auch bei kontinuierlicher Zugabe des Impfproduktes durchgeführt werden.

Beim diskontinuierlichen Impfen wird das Impfprodukt diskontinuierlich derart zugegeben, daß der Massenanteil einer ausgewählten Fraktion des Kristallisates im Kristallisator im vorgegebenen Grenzbereich bleibt.

Die Verhinderung von starken zyklischen Schwankungen in der Kristallgröße des Endproduktes erfordert eine für das System ausreichende und gering schwankende effektive Keimbildungsrate, die sich in zeitlich konstanten Anteilen einzelner Fraktionen, besonders der Fraktion < 1,0 mm, widerspiegelt. Bei Unterschreitung des Grenzbereiches wird geimpft, und bei Überschreitung des Grenzbereiches wird das Impfen eingestellt.

Beim kontinuierlichen Impfen wird der Feststoffanteil des Impfproduktes in Mengen von 5 bis 30 Gew.-%, vorzugsweise 7 bis 15 Gew.-%, bezogen auf den aus dem Kristallisator ausgetragenen Feststoff, zugegeben.

Zweckmäßig beträgt der mittlere Korndurchmesser des Feststoffes des Impfproduktes 0,3 bis 0,8 mm. In jedem Falle ist er kleiner als der Korndurchmesser des gewünschten Kristallisates.

Die Einstellung der gewünschten Korngröße des Feststoffes des Impfproduktes kann in an sich bekannter Weise erfolgen. Vorzugsweise wird sie durch mechanische Zerkleinerung einer der Fraktionen des Endproduktes und/oder in einer separaten Kristallisationsstufe erzeugt. Es wird also nicht das unveränderte Endprodukt eingesetzt.

Das Impfprodukt muß nicht die gleiche chemische Substanz sein wie das Endprodukt der kontinuierlichen Massenkristallisation. Es ist aber vorteilhaft, wenn das Impfprodukt die gleiche chemische Zusammensetzung wie das Endprodukt besitzt.

Beispielsweise wird man bei der kontinuierlichen Massenkristallisation von Ammoniumsulfat zweckmäßigerweise mit Kristallen aus Ammoniumsulfat impfen.

Die Vorteile der Erfindung liegen
- in der definierten Steuerung der Korngrößenverteilung und damit des mittleren Korndurchmessers des Endproduktes,
- bei der Verhinderung von starken zyklischen Schwankungen in der Korngrößenverteilung des Endproduktes und damit einer besseren Auslastung der Anlagenkapazität,
- darin, daß der aktuelle Kristallisationsprozeß keinen Einfluß auf die Steuergröße (auf die Korngröße des Impfproduktes) hat und
- daß beim kontinuierlichen Impfen eine drastische Verringerung der Siebanalysen zur Steuerung des Prozesses vorgenommen werden kann.

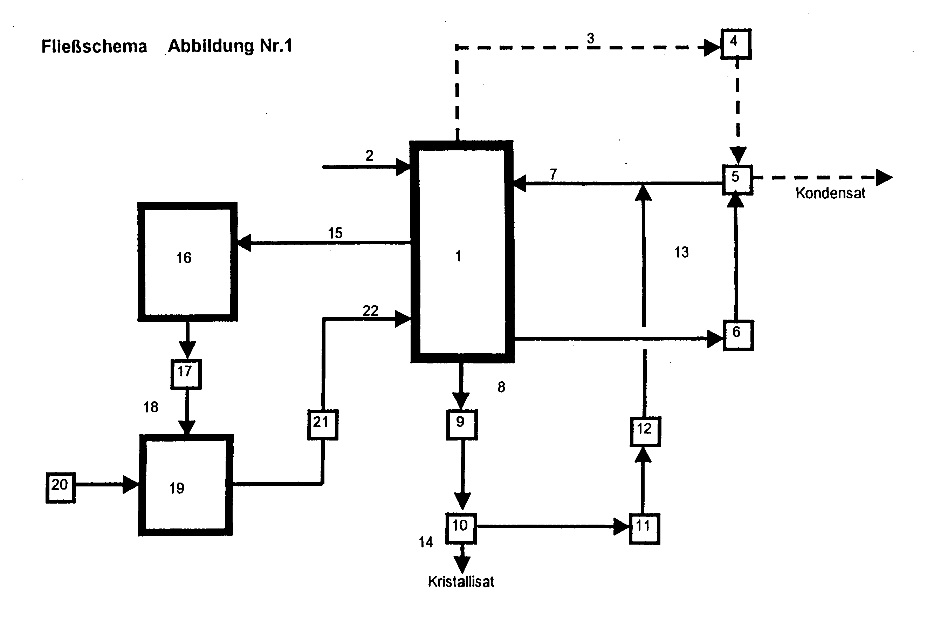

Abbildung 1 zeigt ein Fließschema für die erfindungsgemäße kontinuierliche Massenkristallisation. Darin bedeuten:
- 1: Kristallisationsapparat (Kristaller)
- 2: Leitung (für Speiselösung)
- 3: Leitung (für Brüden)
- 4: Brüdenkompressor
- 5: Wärmeüberträger
- 6: Umwälzpumpe
- 7: Umwälzleitung
- 8: Leitung (für Maische)
- 9: Maischepumpe
- 10: Zentrifuge
- 11: Zwischenbehälter
- 12: Pumpe
- 13: Leitung (für Mutterlauge)
- 14: Leitung (für Kristallisat)
- 15: Leitung (für Teilstrom)
- 16: Abschlämmkristallisator
- 17: Zentrifuge
- 18: Leitung (für Kristallisat bzw. Teil des Impfprodukts)
- 19: Behälter
- 20: Leitung für Teil des Impfproduktes
- 21: Dosier- und Fördersystem
- 22: Leitung für Impfprodukt

Die Kristallisation wird in einem kontinuierlichen Kristallisationsapparat (1), vorzugsweise einem OSLO- oder einem DRAFT TUBE BAFFLE (DTB)-Kristaller, durchgeführt.

Die vorgewärmte Speiselösung (z.B. mit 37 ± 3 Gew.-% Ammoniumsulfat) wird über die Leitung (2) in den Kristaller geführt.

Der anfallende Brüden wird über die Leitung (3) von einem Brüdenkompressor (4) angesaugt und verdichtet. Die Energie des verdichteten Brüdens wird mittels Wärmeüberträger (5) und einer Umwälzpumpe (6) über die Umwälzleitung (7) in den Kristallisationsapparat eingetragen.

Maische wird kontinuierlich über die Leitung (8) abgezogen und mit einer Maischepumpe (9) einer Zentrifuge (10) zugeführt. Die abgetrennte Mutterlauge gelangt in einen Zwischenbehälter (11) und wird mit der Pumpe (12) über die Leitung (13) in die Umwälzleitung (7) gefahren. Das Kristallisat gelangt über die Leitung (14) in nachgeschaltete Bearbeitungsanlagen.

Über Leitung (15) wird ein Teilstrom (flüssige Phase) aus dem Kristallisationsapparat in den Abschlämmkristallisator (16) ausgekreist. Das hierbei anfallende Kristallisat wird über eine Zentrifuge (17) abgetrennt und über die Leitung (18) dem Behälter (19) als möglicher Bestandteil des sogenannten Impfproduktes zugegeben.

Ein Teilstrom des Impfproduktes (beispielsweise aus Ammoniumsulfatkristall), das in Bezug auf Korngrößenverteilung und Menge durch mechanische Zerkleinerung einer Teilmenge des Endproduktes hergestellt wurde, wird über die Leitung (20) ebenfalls dem Behälter (19) zugeführt. Im Behälter (19) wird daraus eine pumpfähige Kristallsuspension erzeugt und mit Hilfe eines Dosier- und Fördersystems (21) über die Leitung (22) so in den Kristaller eingespeist, daß die Kristalle des Impfproduktes nicht sedimentieren können.

Die Erfindung soll an folgenden Ausführungsbeispielen erläutert werden, ohne darauf beschränkt zu sein.

### Beispiel 1 (Vergleichsbeispiel ohne zusätzliches Impfprodukt)

In einem kontinuierlich arbeitenden Kristallisationsapparat (DTB-Kristaller) beträgt der aktive Teil etwa 280 m³.

Die vorgewärmte Speiselösung (Ammoniumsulfatlösung von 38,5 ± 2 Ma.-% Ammoniumsulfatgehalt und etwa 90 °C) wird dem Kristaller ohne zusätzliches Impfprodukt zugeführt. Die Abdampfrate beträgt 30 t/h und die Produktionsrate 20 t/h (Abzug Kristall aus dem Kristaller).

Der Feststoffgehalt der Maische im Kristaller beträgt 35 bis 40 Ma.-%.

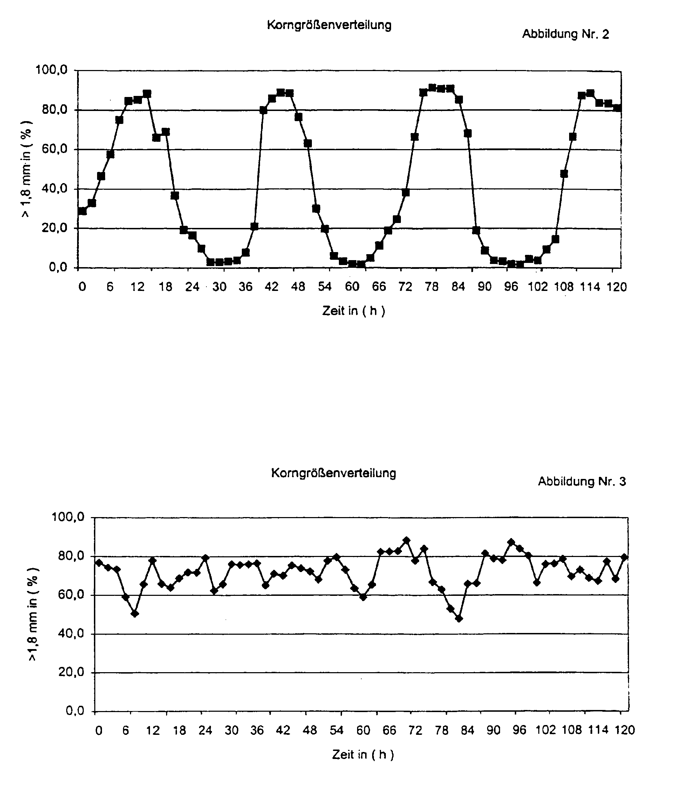

Die Korngrößenverteilung, gemessen an Hand des Anteils der Fraktion > 1,8 mm über einen Zeitraum von 120 Stunden, ist in Abbildung 2 dargestellt. Sie zeigt sehr große Schwankungen in der Korngrößenverteilung.

### Beispiel 2 (diskontinuierliche Zugabe von Impfprodukt)

Der Grundbetriebszustand entspricht dem von Beispiel 1, jedoch mit dem ausdrücklichen Erfordernis, daß außer dem Impfprodukt alle anderen Einspeisungen und die Rückführungen in den Kristallisationsapparat absolut feststofffrei sein müssen.

Mittels einer Korngrößenanalyse der Kristallpartikel vom Inneren des Kristallisationsapparat wird eine Fraktion ausgewählt, deren Größenbereich in der Nähe des mittleren Korndurchmessers der Partikel des Impfproduktes liegen sollte.

Über empirisch zu ermittelnde definierte untere und obere Grenzwerte dieser Fraktion wird der Massenstrom des Impfproduktes diskontinuierlich gesteuert. Für den Beginn und das Ende des diskontinuierlichen Impfens wird der Anteil der Fraktion > 0,4 mm bis < 1,0 mm des Kristallisates im Kristallisationsapparat herangezogen. Bei Unterschreitung von 1 Gew.-% dieser Fraktion wird der Kristallisationsapparat geimpft. Der Feststoffanteil des Impfproduktes beträgt dabei 10 Gew.-% und der mittlere Korndurchmesser liegt bei 0,6 mm.

Bei Überschreiten des Anteils von 2 Gew.-% der ausgewählten Fraktion wird das Impfen eingestellt. Bei deutlicher Überschreitung des oberen Grenzwertes unter Umständen in Verbindung mit der Änderung anderer Betriebsparameter kann durch Einspeisung von Betriebskondensat in den Kristallisationsapparat die vorgegebene Größe wieder eingestellt werden.

Die Korngrößenverteilung, gemessen an Hand des Anteils der Fraktion > 1,8 mm über einen Zeitraum von 120 Stunden, ist in Abbildung 3 dargestellt.

### Beispiel 3 (kontinuierliche Zugabe von Impfprodukt)

Der Grundbetriebszustand entspricht dem von Beispiel 1, jedoch mit dem ausdrücklichen Erfordernis, daß außer dem Impfprodukt alle anderen Einspeisungen und die Rückführungen in den Kristallisationsapparat absolut feststofffrei sein müssen.

Das Impfprodukt wird kontinuierlich mit empirisch zu optimierenden feststehenden Parametern dem Kristallisationsapparat zugeführt. Der Feststoffgehalt des Impfproduktes beträgt 7 Gew.-%, bezogen auf das ausgetragene Endprodukt, und der mittlere Korndurchmesser liegt bei 0,6 mm. Das Impfprodukt wird kontinuierlich mit einem Volumenstrom von 15 m³/h zudosiert.

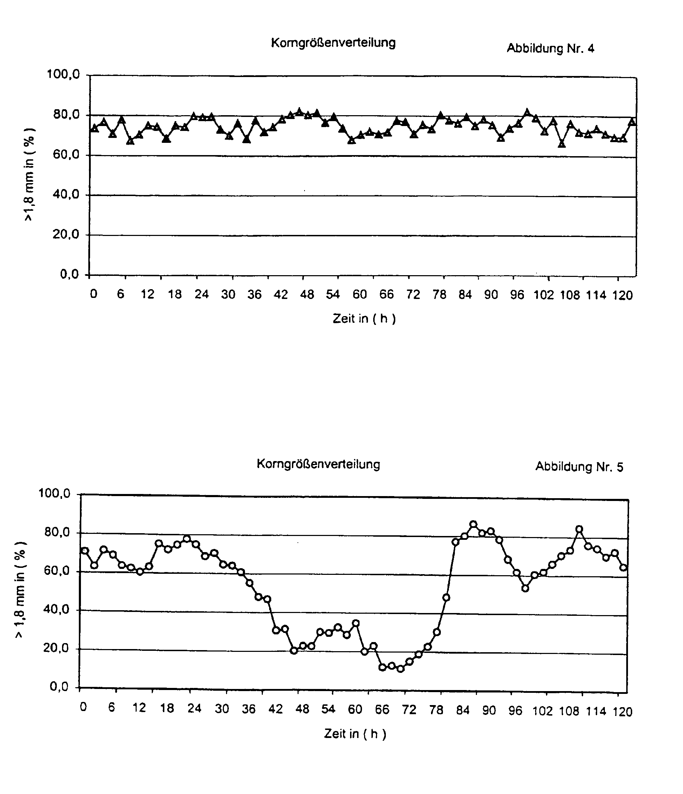

Korngrößenanalysen als Grundlage der Steuerung des Betriebszustandes sind nicht mehr erforderlich oder können zumindest deutlich reduziert werden. Die Korngrößenverteilung, gemessen an Hand des Anteils der Fraktion > 1,8 mm über einen Zeitraum von 120 Stunden, ist in Abbildung 4 dargestellt.

### Beispiel 4 (kontinuierliche Zugabe von viel Impfprodukt)

Der Betriebszustand entspricht dem von Beispiel 3.

Das Impfprodukt wird kontinuierlich mit empirisch zu optimierenden feststehenden Parametern dem Kristallisationsapparat zugeführt.

Der Feststoffgehalt des Impfproduktes beträgt 25 Gew.-%, bezogen auf das ausgetragene Endprodukt, und der mittlere Korndurchmesser liegt bei 0,6 mm.

Das Impfprodukt wird kontinuierlich mit einem Volumenstrom von 25 m³/h zudosiert. Durch den Überschuß von Impfprodukt wird die Korngröße gezielt nach unten gebracht.

Die Korngrößenverteilung, gemessen an Hand des Anteils der Fraktion > 1,8 mm über einen Zeitraum von 120 Stunden, ist in Abbildung 5 dargestellt. In den Stunden 24 bis 80 wird der Anteil der Fraktion > 1,8 mm durch Impfen gezielt in den Bereich von 20 % gefahren.

## Patentansprüche

1. Verfahren zur Steuerung der Kristallgröße bei der kontinuierlichen Massenkristallisation durch Zugabe von Impfprodukten, **dadurch gekennzeichnet, dass**
- das Impfprodukt in seinen Parametern unabhängig vom aktuellen Kristallisationsprozess hergestellt wird,
- der mittlere Korndurchmesser des Feststoffes der Impfprodukte 0,1 bis 1,0 mm beträgt und kleiner als der des gewünschten Kristallisates ist,
- der Feststoff des Impfproduktes unabhängig vom Hauptprozess der Kristallisation aus verschiedenen technologischen Teilströmen im angegebenen Korngrößenbereich erzeugt wird,
- die Temperatur des Impfproduktes bei der Zugabe bis zu 40°C, vorzugsweise 10 bis 30°C, niedriger als die Prozesstemperatur im Kristallisator ist,
- alle anderen Einspeisungen und Rückführungen in den Kristallisator feststofffrei sind und
- die gewünschte Korngröße des Feststoffes des Impfproduktes durch mechanische Zerkleinerung des Endproduktes und/oder in einer separaten Kristallisationsstufe erzeugt wird.

2. Verfahren zur Steuerung der Kristallgröße bei der kontinuierlichen Massenkristallisation durch Zugabe von Impfprodukten nach Anspruch 1, **dadurch gekennzeichnet, dass** das Endprodukt Ammoniumsulfat ist.

3. Verfahren zur Steuerung der Kristallgröße bei der kontinuierlichen Massenkristallisation nach Anspruch 1 oder 2, **dadurch gekennzeichnet, dass** beim diskontinuierlichen Impfen das Impfprodukt diskontinuierlich derart zugegeben wird, dass der Massenanteil einer ausgewählten Fraktion des Kristallisates im Kristallisator im vorgegebenen Grenzbereich bleibt.

4. Verfahren zur Steuerung der Kristallgröße bei der kontinuierlichen Massenkristallisation nach Anspruch 1 oder 2, **dadurch gekennzeichnet, dass** beim kontinuierlichen Impfen der Feststoffanteil des Impfproduktes in Mengen von 5 bis 30 Gew.-% (vorzugsweise 7 bis 15 Gew.-%) bezogen auf den aus dem Kristallisator ausgetragenen Feststoff, zugegeben wird.

5. Verfahren zur Steuerung der Kristallgröße bei der kontinuierlichen Massenkristallisation nach einem oder mehreren der Ansprüche 1 bis 4, **dadurch gekennzeichnet, dass** der mittlere Korndurchmesser des Feststoffes des Impfproduktes 0,3 bis 0,8 mm beträgt.

6. Verfahren zur Steuerung der Kristallgröße bei der kontinuierlichen Massenkristallisation nach einem oder mehreren der Ansprüche 1 bis 5, **dadurch gekennzeichnet, dass** das Impfprodukt die gleiche chemische Zusammensetzung wie das Endprodukt besitzt.

## Claims

1. Method of controlling the size of crystals in a continuous mass crystallization process by adding seeding products, **characterized in that**
- the seeding product is produced using parameters independent from the actual crystallization process;
- the mean grain diameter of the solid matter of the seeding products ranges between 0.1 and 1.0 mm, and is less than the grain diameter of the desired crystallizate;
- the solid matter of the seeding product is created independently from the main crystallization process from different technological sub-streams in the grain size range specified;
- when added, the seeding product's temperature is up to 40°C, preferably 10 to 30°C, lower than the process temperature in the crystallizer; and
- any other feed streams and re-circulation flows into the crystallizer are free from any solid matter and
- the desired grain size of the solid matter of the seeding is produced by mechanical size reduction of the final product and/or in a separate crystallization stage.

2. Method of controlling the size of crystals in a continuous mass crystallization process by adding seeding products according to claim 1, **characterized in that** the final product is ammonium sulphate.

3. Method of controlling the size of crystals in a continuous mass crystallization process according to claim 1 or 2, **characterized in that** in case of discontinuous seeding the seeding product is discontinuously added in a way by which the mass proportion of a selected crystallizate fraction in the crystallizer is kept within the limits specified.

4. Method of controlling the size of crystals in a continuous mass crystallization process according to claim 1 or 2, **characterized in that** in case of continuous seeding the solids content of the seeding product is added in quantities between 5 and 30 per cent by weight (preferably between 7 and 15 per cent by weight) based on the solid matter discharged from the crystallizer.

5. Method of controlling the size of crystals in a continuous mass crystallization process according to one or more of claims 1 to 4, **characterized in that** the mean grain diameter of the solid matter contained in the seeding product ranges from 0.3 mm to 0.8 mm.

6. Method of controlling the size of crystals in a continuous mass crystallization process according to one or more of claims 1 to 5, **characterized in that** the seeding product has the same chemical composition as the final product.

## Revendications

1. Procédé de commande de la taille de cristal lors de la cristallisation de masse continue par ajout de produits d'inoculation, **caractérisé en ce que**
- le produit d'inoculation est préparé, dans ses paramètres, indépendamment du processus de cristallisation en cours,
- le diamètre de grains moyen de la matière solide des produits d'inoculation va de 0,1 à 1,0 mm et est de préférence inférieur à celui du cristallisé souhaité,
- la matière solide du produit d'inoculation est préparée indépendamment du processus principal de cristallisation à partir de sous-flux technologiques dans la plage de granulométrie indiquée,
- la température du produit d'inoculation lors de l'ajout est inférieure d'une valeur allant jusqu'à 40° C, de préférence de 10 à 30° C, à la température de traitement dans le cristallisateur,
- tous les autres apports et recyclages dans le cristallisateur sont exempts de matière solide et
- la granulométrie souhaitée de la matière solide du produit d'inoculation est fabriquée par broyage mécanique du produit final et/ou dans un stade de cristallisation séparé.

2. Procédé de commande de la taille de cristal lors de la cristallisation de masse continue par ajout de produits d'inoculation selon la revendication 1, **caractérisé en ce que** le produit final est du sulfate d'ammonium.

3. Procédé de commande de la taille de cristal lors de la cristallisation de masse continue selon la revendication 1 ou 2, **caractérisé en ce que**, en cas d'inoculation discontinue, le produit d'inoculation est ajouté de manière discontinue de manière à ce que la teneur en masse d'une fraction sélectionnée du cristallisé dans le cristallisateur reste dans la plage limite prescrite.

4. Procédé de commande de la taille de cristal lors de la cristallisation de masse continue selon la revendication 1 ou 2, **caractérisé en ce que**, en cas d'inoculation continue, la teneur en matière solide du produit d'inoculation est ajoutée dans des quantités allant de 5 à 30 % en poids (de préférence 7 à 15 % en poids) par rapport à la matière solide expulsée du cristallisateur.

5. Procédé de commande de la taille de cristal lors de la cristallisation de masse continue selon une ou plusieurs des revendications 1 à 4, **caractérisé en ce que** le diamètre de grains moyen de la matière solide du produit d'inoculation va de 0,3 à 0,8 mm.

6. Procédé de commande de la taille de cristal lors de la cristallisation de masse continue selon une ou plusieurs des revendications 1 à 5, **caractérisé en ce que** le produit d'inoculation possède la même composition chimique que le produit final.
